# EUROPEAN PATENT APPLICATION

(11) **EP 1 710 937 A2**
(43) Date of publication of application: **11.10.2006**
(21) Application number: 06251280.1
(22) Date of filing: 09.03.2006
(51) Int. Cl.: H04H 1/00

(54) **Apparatus for decoding TII for digital broadcasting receiver and a method thereof**

(30) Priority: 18.03.2005 KR 2005022793
(71) Applicant: Samsung Electronics Co., Ltd., Suwon-si, Gyeonggi-Do (KR)
(72) Inventor: Park, Chan-sub, Nam-gu Incheon (KR)
(74) Representative: Brandon, Paul Laurence

(57) **Abstract**

A transmitter identification information (TII) decoding apparatus (250) for a digital broadcasting receiver and a method thereof. The TII decoding apparatus comprises a power calculation unit (251) calculating power of respective sub-carriers with respect to a frequency domain signal converted from a null symbol constituting a frame of a signal received through a digital broadcasting receiver; a maximum value detection unit (253) detecting a maximum value of the calculated power; and a TII table comparison unit (259) calculating a main ID and a sub ID of TII interleaved in the null symbol, using the maximum value. Accordingly, since a dedicated memory is not required to store TII reference patterns and processes for calculating the main ID and the sub ID are reduced, the hardware can be minimized and time for the TII decoding can be saved.

## Description

The present invention relates to a transmitter identification information (TII) decoding apparatus for a digital broadcasting receiver and methods thereof.

As digital audio devices having superior sound quality, such as compact disc (CD) and digital versatile disc (DVD), have recently been widespread, demand by audiences for digital broadcasting of high sound quality is increasing. According to this, digital audio broadcasting (DAB) has been introduced in order to overcome a limit of the sound quality providable by existing frequency modulation (FM) broadcasting.

The DAB system is capable of implementing superior reception performance even during transfer as well as high sound quality. Furthermore, the DAB system enables high-speed reception of digital data such as images and characters. Since the DAB system focuses recently on a variety of multimedia services including an image rather than mere audio broadcasting, it is also called digital multimedia broadcasting (DMB).

The DMB system include European, American and Japanese types. EUREKA 147, which is the European digital modulating DMB scheme, uses an orthogonal frequency division multiplexing (OFDM) scheme robust to multi-path fading distortion in terrestrial wave. The Korean DMB service offers the sound quality equivalent to that of CD, various types of data services and high-quality mobile reception, based on the European DMD.

FIG. I shows the structure of a transmission frame in the DMB system of the OFDM scheme.

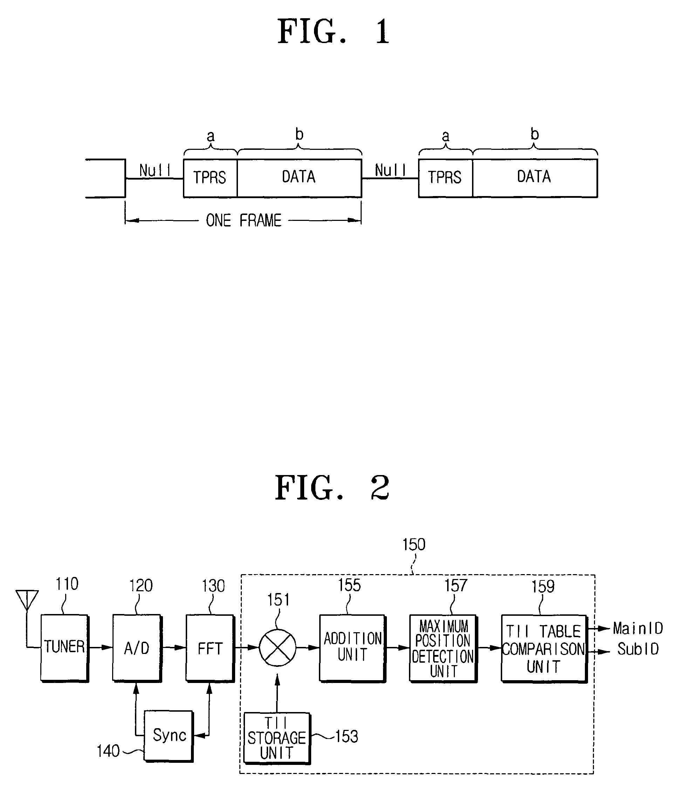

Referring to FIG. 1, the transmission frame comprises a single null symbol and a plurality of OFDM symbols after the null symbol.

A DMB transmitter generates a phase reference symbol (PRS) and inverse fast Fourier transform (IFFT)-processes the PRS. A first OFDM symbol next to the null symbol is a time-domain PRS (a) (hereinafter, referred to as 'TPRS'). Effective data OFDM symbols (b) are arranged next to the TPRS.

The null symbol section and the TPRS (a) constitute a synchronization channel. Each symbol comprises a plurality of time-area OFDM sub-carrier signals.

Although the null symbol section does not carry a main signal, transmitter identification information (TII) can be carried in an OFDM carrier of the limited number in the null symbol section.

The TII supplies a correct ID in relation to each transmitter on the DAB network and can be selectively interleaved in the null symbol section. A TII signal comprises pairs of a predetermined number of neighboring sub-carriers, among the OFDM symbols. According to a pattern of the sub-carriers where the TII signals are included, the transmitter ID can be checked.

The TII is allocated to the respective transmitters, as two numbers, that is, a pattern number p (main ID) and a comb number c (sub ID). The allocated IDs determine the pattern of the sub-carriers.

FIG. 2 is a block diagram illustrating the DAB/DMB receiver including the conventional TII decoding apparatus.

Referring to FIG. 2, the DAB/DMB receiver comprises a tuner 110 converting a radio frequency (RF) signal received through a channel into a base signal, an analog/digital (A/D) converter 120 converting a received analog signal to a digital signal, a fast Fourier transform (FFT) unit 130 performing FFT with the null symbol interleaved with the TII among received signal frames, a synchronization unit 140 recovering the sub-carrier frequency and timing, and a TII decoding unit 150 decoding the TII signal with respect to the FFT-processed null symbol.

The TII decoding unit 150 comprises a multiplication unit 151, a TII storage unit 153, an addition unit 155, a maximum position detection unit 157, and a TII table comparison unit 159.

The multiplication unit 151 multiplies the FFT-processed null symbol by a reference pattern output from the TII storage unit 153. The TII storage unit 153 stores possible TII patterns as the reference patterns, respectively, and outputs the reference patterns to the multiplication unit 151.

The addition unit 155 accumulates the multiplied values output from the multiplication unit 151, thereby generating a correlation value of the TII inserted in the received signal and the respective reference patterns stored in the TII storage unit 153 and received signals, and outputs the correlation value to the maximum position detection unit 157.

Accordingly, the maximum position detection unit 157 detects a maximum value with respect to the respective correlation values input from the addition unit 155. The TII table comparison unit 159 searches a TII table to detect the main ID and the sub ID corresponding to the reference pattern of the maximum value. The TII, that is, the main ID and the sub ID corresponding to the respective reference patterns are tabulated and stored in the TII table.

To summarize, according to the conventional decoding method, all the possible TII patterns are stored in the receiver, the correlation values regarding the TII extracted from the received signals are calculated to detect a maximum value among the calculated values. This process is repeated until the maximum value is detected and the TII pattern corresponding to the maximum value is detected, thereby outputting the ID corresponding to the TII pattern.

According to the conventional TII decoding method, however, a large capacity of the memory is required to store all the TII pattern information. Considering that more than a hundred Tll patterns are generally used in the DAB/DMB system, price of the product should increase in order to generate all the possible TII patterns.

Furthermore, since the conventional TII decoding method requires repetitive calculation of the correlation for the all TII patterns until the maximum value is detected, load for processing the system is increased especially when dealing with a lot of TII patterns, thereby elongating the processing time and deteriorating performance of the system.

Accordingly, an aim of preferred embodiments of the present invention is to provide a transmitter identification information (TII) decoding apparatus for a digital broadcasting receiver, which is capable of reducing memory capacity and also reducing a load for processing the system, to thereby detect TII and output an ID at high speed, and a method for the same.

According to an aspect of the present invention, there is provided a TII decoding apparatus comprising a power calculation unit calculating power of respective sub-carriers with respect to a frequency signal converted from a null symbol constituting a frame of a signal received through a digital broadcasting receiver; a maximum value detection unit detecting a maximum value of the calculated power; and a TII table comparison unit calculating a main ID and a sub ID of TII interleaved in the null symbol, using the maximum value.

Suitably, the sub-carriers are divided into predetermined groups, and the TII decoding apparatus may further comprise a group index detection unit arranging a predetermined number of the maximum values in order of magnitude and detecting indexes of the groups having the sub-carriers, corresponding to the arranged maximum values.

Preferably, the main ID is calculated using the detected indexes of the groups.

The TII decoding apparatus may further comprise a position-in-group detection unit detecting a position of the sub-carrier corresponding to the maximum value in the detected group.

Suitably, the sub ID is calculated using the position of the sub-carrier in the group.

Suitably, the TII table comparison unit comprises a TII table which lists and stores the main ID and the sub ID according to the indexes of the group and the sub-carrier positions in the group.

Suitably, the digital broadcasting receiver conforms to digital audio broadcasting/ digital multimedia broadcasting (DAB/DMB).

According o the present invention in a second aspect, there is provided a method of TII decoding, comprising calculating power of respective sub-carriers with respect to a null symbol constituting an orthogonal frequency division multiplexing (OFDM) signal received through a digital broadcasting receiver; detecting a maximum value of the calculated power; and calculating a main ID and a sub ID of TII interleaved in the null symbol, using the maximum value.

Suitably, the sub-carriers are divided into predetermined groups, and the method further comprises the step of arranging a predetermined number of the maximum values in order of magnitude and detecting indexes of the groups having the sub-carriers, corresponding to the arranged maximum values.

Suitably, the method further comprises the step of detecting a position of the sub-carrier corresponding to the maximum value in the detected group.

Suitably, it is determined whether the positions of the sub-carriers detected from the respective groups having the indexes are identical and when different, returning to the step of detecting the index.

Further features of the present invention are set out in the appended claims.

The present invention will become more apparent by describing in detail exemplary embodiments thereof with reference to the attached drawing figures, wherein;
FIG. 1 is a view showing the structure of a digital data frame using an orthogonal frequency division multiplexing (OFDM) scheme;
FIG. 2 is a block diagram illustrating the structure of a transmitter identification information (TII) decoding apparatus for a conventional digital audio broadcasting/ digital multimedia broadcasting (DAB/DMB) receiver;
FIG. 3 is a block diagram illustrating the structure of a TII decoding apparatus for a DAB/DMB receiver according to an embodiment of the present invention; and
FIG. 4 is a flowchart for explaining the operation of the TII decoding apparatus for the DAB/ DMB receiver according to an embodiment of the present invention.

Hereinafter, an embodiment of the present invention will be described in detail with reference to the accompanying drawing figures.

In the following description, the same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

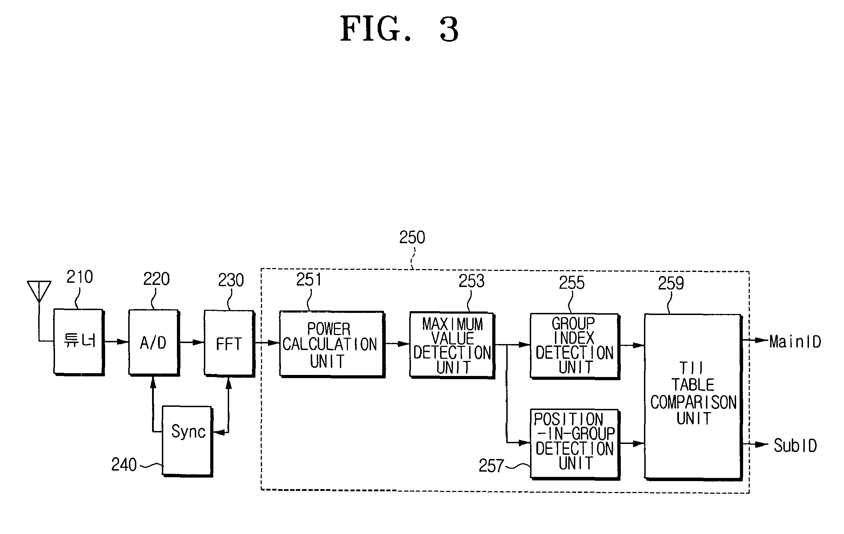

FIG. 3 is a block diagram showing the structure of a TII decoding apparatus for a digital audio broadcasting/digital multimedia broadcasting (DAB/DMB) receiver according to an embodiment of the present invention.

Referring to FIG. 3, the DAB/DMB receiver comprises a tuner 210 converting a radio frequency (RF) signal received through a channel into a base signal, an analog/digital (A/D) converter 220 converting a received analog signal to a digital signal, a fast Fourier transform (FFT) unit 230 performing FFT with the null symbol interleaved with the TII among received signal frames, a synchronization unit 240 recovering the sub-carrier frequency and timing, and a TII decoding apparatus 250 decoding the TII signal with respect to the FFT-processed null symbol.

The TII decoding apparatus 250 according to an embodiment of the present invention comprises a power calculation unit 251, a maximum value detection unit 253, a group index detection unit 255, a position-in-group unit 257, and a TII table comparison unit 259.

The power calculation unit 251 calculates power of the respective sub-carriers with respect to the FFT-processed null symbol. Differently from the present embodiment, a signal size such as an absolute value of the signal may be detected from the respective sub-carriers, instead of the power of a signal.

As aforementioned, an OFDM symbol comprises a plurality of OFDM sub-carrier signals. Especially, the TII interleaved in the null symbol is selectively carried on the limited number of OFDM sub-carrier signals among the plurality of OFDM sub-carrier signals constituting the null symbol.

In other words, when dividing the plurality of OFDM sub-carrier signals constituting the null symbol into a plurality of groups, the TII signal is interleaved in a predetermined number of groups of the plurality of groups. In the sub-carrier group being interleaved with the TII signal, a pair of sub-carriers neighboring each other constitute the TII signal. The pair of sub-carriers constituting the TII signal in each group have the same locations.

Therefore, by detecting the group having the TII signal from the sub-carrier groups and location of the TII signal in the group, the TII corresponding to a detected pattern, that is, a main ID and a sub ID of the receiver can be found. Since the signal is interleaved only in the sub-carrier interleaved with the TII in the null symbol, it can be understood that the TII signal is interleaved in the sub-carrier corresponding to a maximum value of the power.

Therefore, a predetermined number of the sub-carrier groups corresponding to the maximum power are sequentially selected from the powers of the respective sub-carriers of the null symbol calculated by the power calculation unit 251. When the position of the maximum power of the sub-carrier in the selected group is detected, the detected sub-carrier corresponds to the pattern interleaved with the TII signal.

The maximum value detection unit 253 detects the maximum value of the power calculated by the power calculation unit 251 and the position of the corresponding sub-carrier and inputs the detected value and the position to the group index detection unit 255 and the position-in-group detection unit 257.

The group index detection unit 255 arranges the group according to magnitude of the maximum values input from the maximum value detection unit 253. (for example, as a first maximum value, a second maximum value, a third maximum value...) A predetermined number of indexes of the sub-carrier group, corresponding to the arranged maximum values, are sequentially detected. For example, the index of eight sub-carrier groups may be represented by the number 0 to 7. Therefore, if the TII signals are interleaved in four sub-carrier groups, for example, the group index may be detected as 3, 1, 0 and 2.

The position-in-group detection unit 257 detects the position of the sub-carriers corresponding to the maximum values in the respective sub-carrier groups according to the maximum values input from the maximum value detection unit 253.

The group index detection unit 255 inputs the index of the sub-carrier group from which the maximum value is detected to the TII table comparison unit 259. The position-in-group detection unit 257 inputs the position of the sub-carrier of each group, where the maximum value is detected, to the TII table comparison unit 259.

The TII table comparison unit 259 searches a TII table to detect the index of the predetermined number of sub-carrier groups where the maximum value is detected, and detect from the respective groups the main ID and the sub ID corresponding to the position of the sub-carrier where the maximum value is detected. In the above example, the main ID can be detected by arranging the index positions of the group having the maximum value in order of magnitude and synthesizing the four group indexes.

Because the positions for interleaving the TII signal are the same in one group, when the positions of the sub-carriers where the maximum value is detected are identical, it can be confirmed whether the group indexes and the positions of the sub-carriers are correctly detected. Reliability of detection of the TII pattern and the ID corresponding to the pattern can be thus determined.

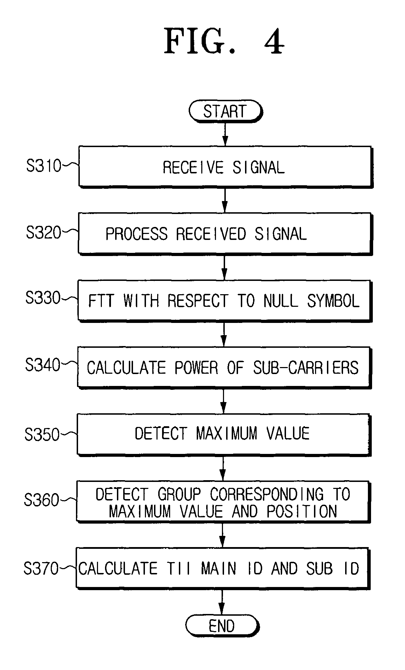

FIG. 4 is a flowchart illustrating the operation of the TII decoding apparatus for the DAB/DMB receiver, according to an embodiment of the present invention.

The DAB/DMB receiver receives a radio frequency (RF) signal of a selected channel through an antenna (S310), converts the RF signal to a base signal, converts the base signal to a digital signal, and processes the digital signal by performing frequency recovery and timing recovery (S320). In addition, the DAB/DMB receiver performs FFT with respect to the null symbol interleaved with the TII in the processed digital signal (S330).

The TII decoding apparatus 250 according to an embodiment of the present invention calculates the power of the respective sub-carriers with respect to the FFT-processed null symbol by the power calculation unit 251 (S340).

The maximum value detection unit 253 detects the maximum value of the powers calculated by the power calculation unit 251 (S350).

The index of the sub-carrier group corresponding to the maximum value and the position of the sub-carrier are detected by the group index detection unit 255 and the position-in-group detection unit 257, respectively (S360).

As described above, since the signal is interleaved only in the sub-carrier interleaved with the TII, in the null symbol, the maximum value of the sub-carrier in the group having the TII signal is smaller than that of the group not having the TII signal. Considering this, the maximum values of the sub-carriers in each group are compared and the predetermined number of the maximum values are detected in order of magnitude, thereby detecting the index of the group.

The number of the groups to be detected is determined based on a transmission mode of the system, and the number corresponds to the number of groups being interleaved with the TII signal. The main ID can be recognized according to the index of the group.

The positions of the sub-carriers in the sub-carrier group interleaved with the TII signal are identical with respect to the all groups, and the sub ID can be recognized according to the sub-carrier positions in the group. Therefore, the sub-carrier position of the sub-carrier in the group is detected by the position-in-group detection unit 257.

Finally, the TII table comparison unit 259 searches the TII table and calculates the index of the predetermined number of sub-carrier groups where the maximum value is detected and the main ID and sub ID corresponding to the position of the sub-carrier where the maximum value is detected, in each group (S370).

As can be appreciated from the above description, according to an embodiment of the present invention, the TII main ID and sub ID are calculated by calculating the power with respect to the respective sub-carriers constituting the null symbol, detecting the maximum value and accordingly determining the pattern of the interleaved TII. Therefore, a dedicated memory is not necessary for storage of the TII reference pattern and processes for calculating the main ID and the sub ID are reduced. As a result, the hardware can be minimized and time for the TII decoding can be saved.

While the invention has been shown and described with reference to certain embodiments thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A transmitter identification information (TII) decoding apparatus (250) comprising:
a power calculation unit (251) calculating powers of respective sub-carriers with respect to a frequency domain signal converted from a null symbol constituting a frame of a signal received through a digital broadcasting receiver;
a maximum value detection unit (253) detecting maximum values of the calculated powers; and
a TII table comparison unit (259) generating a main ID and a sub ID of TII inserted in the null symbol, using the maximum value.

2. The TII decoding apparatus (250) of claim 1, wherein the sub-carriers are divided into a predetermined number of groups, and
further comprising a group index detection unit (255) arranging a predetermined number of the maximum values in order of magnitude and detecting indexes of the sub-carrier groups, corresponding to the arranged maximum values.

3. The TII decoding apparatus (250) of claim 2, wherein the main ID is calculated using the detected indexes of the sub-carrier groups.

4. The TII decoding apparatus (250) of claim 2 or claim 3, further comprising a position-in-group detection unit (257) detecting a position of the sub-carrier corresponding to the maximum value in each of the detected group.

5. The TII decoding apparatus (250) of claim 4, wherein the sub ID is calculated using the position of the sub-carrier in each of the group.

6. The TII decoding apparatus (250) of any one of claims 3 to 5, wherein the TII table comparison unit (259) comprises a TII table which lists and stores the main ID and the sub ID according to the indexes of the group and the sub-carrier positions in the group.

7. The TII decoding apparatus (250) of any preceding claim, wherein the digital broadcasting receiver conforms to digital audio broadcasting/ digital multimedia broadcasting (DAB/DMB).

8. A method of TII decoding, comprising:
calculating powers of respective sub-carriers with respect to a null symbol constituting an orthogonal frequency division multiplexing (OFDM) signal received through a digital broadcasting receiver;
detecting maximum values of the calculated powers; and
calculating a main ID and a sub ID of TII inserted in the null symbol, using the maximum values.

9. The method of claim 8, wherein the sub-carriers are divided into a predetermined number of groups, and
further comprising the step of arranging a predetermined number of the maximum values in order of magnitude and detecting indexes of the sub-carrier groups, corresponding to the arranged maximum values.

10. The method of claim 9, wherein the main ID is calculated using the detected indexes of the sub-carrier groups.

11. The method of claim 9 or claim 10, further comprising the step of detecting a position of the sub-carrier corresponding to the maximum value in each of the detected group.

12. The method of claim 11, wherein it is determined whether the positions of the sub-carriers detected from the respective groups having the indexes are identical and when different, returning to the step of detecting the index.

13. The method of claim 11 or claim 12, wherein the sub ID is calculated using the position of the sub-carrier in each of the group.

14. The method of any of claims 10 to 13, wherein the step of calculating TII calculates the main ID and the sub ID using a TII table listing and storing the main ID and the sub ID according to the indexes of the group and the sub-carrier positions in the group.

15. The method of any of claims 8-14, wherein the digital broadcasting receiver conforms to digital audio broadcasting/ digital multimedia broadcasting (DAB/DMB).
